(19) **Europäisches Patentamt / European Patent Office / Office européen des brevets**

(11) **EP 3 167 406 B1**

(12) **FASCICULE DE BREVET EUROPEEN**

(45) Date de publication et mention de la délivrance du brevet:
**30.08.2023 Bulletin 2023/35**

(21) Numéro de dépôt: **15736460.5**

(22) Date de dépôt: **08.07.2015**

(51) Classification Internationale des Brevets (IPC):
**G06V 20/56** *(2022.01)*

(52) Classification Coopérative des Brevets (CPC):
**G06V 20/56**

(86) Numéro de dépôt international:
**PCT/EP2015/065639**

(87) Numéro de publication internationale:
**WO 2016/005470 (14.01.2016 Gazette 2016/02)**

(54) **ESTIMATION DE LA DISTANCE DE VISIBILITE METEOROLOGIQUE**

SCHÄTZUNG DER METEOROLOGISCHEN SICHTWEITE

ESTIMATION OF THE METEOROLOGICAL VISIBILITY DISTANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2014 FR 1401537**

(43) Date de publication de la demande:
**17.05.2017 Bulletin 2017/20**

(73) Titulaire: **Valeo Schalter und Sensoren GmbH 74321 Bietigheim-Bissingen (DE)**

(72) Inventeurs:
- **AHIAD, Samia**
  **F-94046 Créteil Cedex (FR)**
- **ROBERT, Caroline**
  **F-94046 Créteil Cedex (FR)**

(74) Mandataire: **Claassen, Maarten Pieter Valeo Schalter und Sensoren GmbH CDA-IP Laiernstraße 12 74321 Bietigheim-Bissingen (DE)**

(56) Documents cités:
**US-B2- 7 970 178**

- **Takayuki Miyahara ET AL: "Rain and Fog Recognition System Using Multiple in-Vehicle Sensors", ITS JAPAN, 14th World Congress on Intelligent Transport Systems, 1 octobre 2007 (2007-10-01), XP055181582, Extrait de l'Internet: URL:http://www.dnhp.denso.co.jp/ja/aboutde nso/technology/dtr/v15/files/13.pdf [extrait le 2015-04-08]**
- **Nicolas Hautière ET AL: "Mesure du contraste local dans les images, application à la mesure de distance de visibilité par caméra embarquée" In: "Traitement du Signal", 1 janvier 2006 (2006-01-01), XP055188510, ISSN: 0765-0019 vol. 23, pages 145-158, DOI: 10.3166/rts.87.89-108, cité dans la demande le document en entier**
- **HAUTIERE N ET AL: "Experimental Validation of Dedicated Methods to In-Vehicle Estimation of Atmospheric Visibility Distance", IEEE TRANSACTIONS ON INSTRUMENTATION AND MEASUREMENT, IEEE SERVICE CENTER, PISCATAWAY, NJ, US, vol. 55, no. 10, 1 octobre 2008 (2008-10-01), pages 2218-2225, XP011226765, ISSN: 0018-9456**

**Description**

La présente invention concerne de manière générale le domaine des véhicules automobiles, et plus précisément un procédé et un système embarqué permettant d'estimer la distance de visibilité météorologique.

La vision joue un rôle fondamental dans la conduite automobile puisqu'elle permet au conducteur d'acquérir des informations sur les conditions environnementales et d'adapter en conséquence sa conduite. Toute perte de visibilité constitue ainsi un facteur fortement accidentogène. La perte de visibilité peut être due notamment à la topographie de la route, à la présence de la végétation, à la présence d'un obstacle masquant temporairement la route, ou encore à des conditions météorologiques dégradées, en particulier lors de la présence de brouillard.

On s'intéresse dans la suite plus particulièrement à la notion de visibilité météorologique. La définition de la distance de visibilité météorologique généralement retenue, en particulier par la Commission Internationale de l'Eclairage (Commission Internationale de l'Éclairage CIE (1987) « International Lighting Vocabulary », Publication n°17.4), est la distance au-delà de laquelle un objet est perçu avec un contraste inférieur à une valeur prédéterminée, par exemple de l'ordre de 5%. Typiquement, un objet noir sur fond blanc ou blanc sur fond noir a un contraste de 1 (100%) alors que ce même objet noir sur fond noir ou blanc sur fond blanc a un contraste égal à 0.

Une estimation précise et en temps réel de la distance de visibilité est nécessaire pour pouvoir alerter le conducteur des risques, par exemple en affichant un message demandant de réduire la vitesse de conduite. D'autres applications consistent à renseigner un système d'aide à la conduite, par exemple pour réduire automatiquement la vitesse, ou pour gérer l'allumage/l'extinction des feux antibrouillard du véhicule.

Des appareils de types transmissiomètres ou diffusiomètres sont utilisés, en particulier dans les aéroports, pour estimer la distance de visibilité. Néanmoins, ces appareils peuvent difficilement être embarqués sur un véhicule automobile.

On utilise donc en général une caméra dédiée montée sur le véhicule pour déterminer cette distance de visibilité en quantifiant les contrastes que l'on retrouve sur la route, puis en estimant la distance du point où la visibilité s'arrête.

En particulier, le document US 7,970, 178 décrit un procédé dans lequel on utilise le marquage routier, en particulier les lignes au sol, comme zone d'intérêt pour le calcul des contrastes. Une ligne au sol étant théoriquement blanche sur une route théoriquement noire, cette ligne constituent de mire sur laquelle on peut se baser avec le traitement d'image pour quantifier les variations du contraste dues aux conditions météorologiques. On va donc extraire les contrastes et décider que la distance de visibilité s'arrête là où le contraste passe en deçà de 5%. Ce type de procédé repose néanmoins sur l'hypothèse du « mode plan » qui permet, à partir des paramètres de la caméra, de transformer une ligne dans une image en une distance dans le monde réel. De plus, la précision des estimations est liée à la qualité du marquage au sol. Un défaut de peinture des lignes, des liges discontinues ou encore une route qui n'est pas vraiment noire sont autant de facteurs dégradant l'estimation. Enfin, les lignes au sol ont des petites dimensions et disparaissent ainsi très vite dans le décor.

Le document WO 2010/099847 décrit un autre procédé dans lequel on utilise deux caméras. Les zones d'intérêts pour l'extraction des contrastes sont néanmoins toujours les marquages au sol de sorte que ce procédé, bien que plus précis, reste insuffisant. De plus, l'utilisation de deux caméras spécialement dédiées à l'estimation de la distance de visibilité météorologique est une solution coûteuse.

L'article intitulé « Rain and Fog Recognition System Using Multiple in-Vehicle Sensors » par Takayuki Miyahara et al. a pour sujet la visibilité météorologique.

La présente invention a pour but de pallier les inconvénients et limitations des procédés et systèmes connus et est définie dans les revendications 1 et 7.

Selon d'autres caractéristiques additionnelles possibles :

- Le système de localisation est par exemple un système de navigation ou un système de détection d'obstacle ;
- ledit au moins un objet localisé est un autre véhicule à l'arrière duquel ledit véhicule automobile se trouve ;
- l'étape de détermination comporte une étape de calcul d'un coefficient d'extinction atmosphérique k à partir d'un premier contraste de l'objet localisé à une première distance estimée par le système, ledit premier contraste étant extrait d'une première image captée par ladite caméra à un premier instant, et d'un deuxième contraste de l'objet localisé à une deuxième distance estimée par le système, ledit deuxième contraste étant extrait d'une deuxième image captée par ladite caméra à un deuxième instant.
- ledit coefficient d'extinction atmosphérique k peut être calculé selon la relation

$$k = \frac{\ln\left(C_{i+1}/C_i\right)}{d_i - d_{i+1}}$$

dans laquelle $C_i$ est le premier contraste à la première distance $d_i$ et

$C_{i+1}$ est le deuxième contraste de l'objet localisé à la deuxième distance $d_{i+1}$ ;

- ladite distance de visibilité météorologique peut notamment être estimée selon la relation

$$\hat{D}_{vis} = \frac{3}{k}.$$

L'invention a également pour objet un système d'estimation de la distance de visibilité météorologique, embarqué sur un véhicule automobile et comprenant une caméra apte à capter des images successives de paysages et des moyens de traitement desdites images aptes à extraire des contrastes dans au moins une zone d'intérêt des images et à déterminer ladite distance de visibilité météorologique à partir des contrastes extraits, le système étant caractérisé en ce qu'il comporte un système apte localiser un objet et à fournir aux moyens de traitement desdites images une estimation de la distance séparant le véhicule automobile de l'objet localisé et en ce que ladite au moins une zone d'intérêt est centrée sur ledit objet localisé.

Le système de localisation peut être un système de navigation, ou un système de détection d'obstacles.

La caméra peut être multifonctions, et être ainsi également utilisée par le système de détection d'obstacles pour détecter l'objet.

En variante, le système de détection d'obstacles comporte un radar ou un laser ou une autre caméra.

L'invention et les avantages qu'elle procure seront mieux compris au vu de la description suivante d'un exemple de réalisation, faite en référence aux figures annexées, dans lesquelles :

- la figure 1 schématise un véhicule équipé d'un système d'estimation de la distance de visibilité météorologique selon un mode de réalisation possible conforme à l'invention;
- la figure 2 donne un synoptique simplifié d'un exemple de procédé mis en oeuvre par le système de la figure 1 pour l'estimation de la distance de visibilité météorologique ;
- la figure 3 illustre des résultats de distances de visibilité estimées lors de différents tests effectués par la Demanderesse ;
- la figure 4 illustre des résultats de distances de visibilité estimées en fonction de la distance séparant le véhicule automobile d'un véhicule détecté par le système de détection d'obstacle.

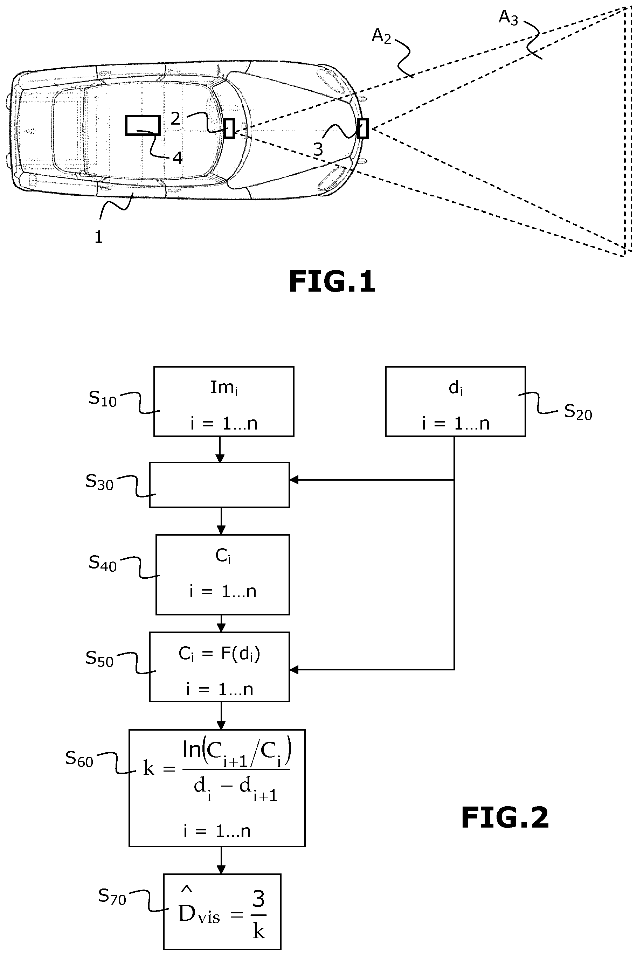

La figure 1 illustre schématiquement un véhicule automobile 1 équipé d'un système d'estimation selon un premier mode de réalisation possible de l'invention.

Ce système comprend en particulier, de manière classique, une caméra 2 apte à capter des images successives de paysages. On note $A_2$ le cône de vue correspondant à cette caméra 2. La caméra 2 est de préférence localisée à un endroit du véhicule qui correspond le mieux à ce que le conducteur voit, par exemple centrée au niveau du pare-brise à l'intérieur de l'habitacle. Dans cet exemple non limitatif, le véhicule 1 est également doté d'un système 3 de détection d'obstacles, placé par exemple au niveau du pare- choc avant du véhicule. On note $A_3$ le cône de détection lié à ce système. Un tel système de détection d'obstacle, dans lequel le détecteur est un laser, un radar, ou éventuellement une autre caméra, est classiquement utilisé pour offrir des fonctionnalités sécuritaires (respect des interdistances, freinage automatique d'urgence) et/ou de confort (aide au parking), et permet d'extraire en particulier la distance séparant le véhicule automobile 1 d'un objet détecté. Des moyens 4 de traitement, comprenant en particulier un microcontrôleur, une mémoire de données et une mémoire de programmes logiciels, reçoivent les informations de la caméra 2 et du système 3 de détection d'obstacles.

La présente invention propose d'utiliser les obstacles détectés, et notamment un autre véhicule roulant à l'avant du véhicule automobile 1, pour former la zone d'intérêt à suivre sur les images captées par la caméra 2. En d'autres termes, lorsqu'un obstacle tel qu'un autre véhicule automobile, est détecté dans le cône de détection $A_3$, il est utilisé comme mire dans le traitement des images captées par la caméra pour l'extraction des contrastes et l'estimation de la distance de visibilité météorologique.

La figure 2 illustre sous forme de synoptique simplifié différentes étapes qui peuvent mises en oeuvre par le système d'estimation de la distance de visibilité météorologique de la figure 1. Des images $Im_i$ du paysage sont captées à différents instants successifs $t_i$ par la caméra 2 et mémorisées pour traitement par les moyens 4 de traitement (étape $S_{10}$). En parallèle, le système de détection d'obstacles scrute l'avant du véhicule pour détecter un objet, de préférence un autre véhicule automobile. Dès qu'un objet est détecté et traqué, le système 3 fournit les informations de distance $d_i$ ainsi que les dimensions hauteur/largeur de l'objet (étape $S_{20}$). Ces données sont projetées dans les images $Im_i$

(étape $S_{30}$) par transformation géométrique, de manière à définir la zone d'intérêt des images sur laquelle les contrastes vont pouvoir être extraits. L'étape $S_{40}$ représente l'étape classique d'extraction des contrastes $C_i$ dans une zone d'intérêt d'une image $Im_i$. Les moyens 4 de traitement utilisent d'une part, les contrastes $C_i$ extraits et d'autre part, les distances $d_i$ fournies par le système de détection d'obstacles pour documenter une base de données reliant chaque contraste $C_i$ à une distance $d_i$ (étape $S_{50}$).

D'après la loi de Koschmieder, le contraste C d'un objet situé à une distance d peut s'exprimer par la relation :

$$C = C_0 e^{-kd}$$

dans laquelle k représente le coefficient d'extinction atmosphérique, et $C_0$ est le contraste initial de l'objet.

Par ailleurs, comme décrit notamment dans le document « Mesure du contraste local dans les images, Application à la mesure de distance de visibilité par caméra embarquée », Nicolas Hautière, Didier Aubert et Michel Jourlin, traitement du signal 2006_volume 23_numéro 2, une estimation $\hat{D}_{vis}$ de la distance de visibilité peut être obtenue par la relation :

$$\hat{D}_{vis} = \frac{3}{k}$$

Ainsi, si l'on note $C_i$ et $C_{i+1}$ les contrastes extraits sur deux instants successifs $t_i$ et $t_{i+1}$ à l'étape $S_{40}$ pour un objet détecté aux distances $d_i$ et $d_{i+1}$ , on a :

$$C_i = C_0 e^{-kd_i}$$

et

$$C_{i+1} = C_0 e^{-kd_{i+1}}$$

soit :

$$C_{i+1} = C_i e^{kd_i} e^{-kd_{i+1}} = C_i e^{k(d_i - d_{i+1})}$$

Les moyens 4 de traitement peuvent ainsi calculer en temps réel (étape $S_{60}$), la valeur du coefficient k à partir de la relation :

$$k = \frac{\ln(C_{i+1}/C_i)}{d_i - d_{i+1}}$$

Pour en déduire la distance de visibilité estimée (étape $S_{70}$):

$$\hat{D}_{vis} = \frac{3}{k}$$

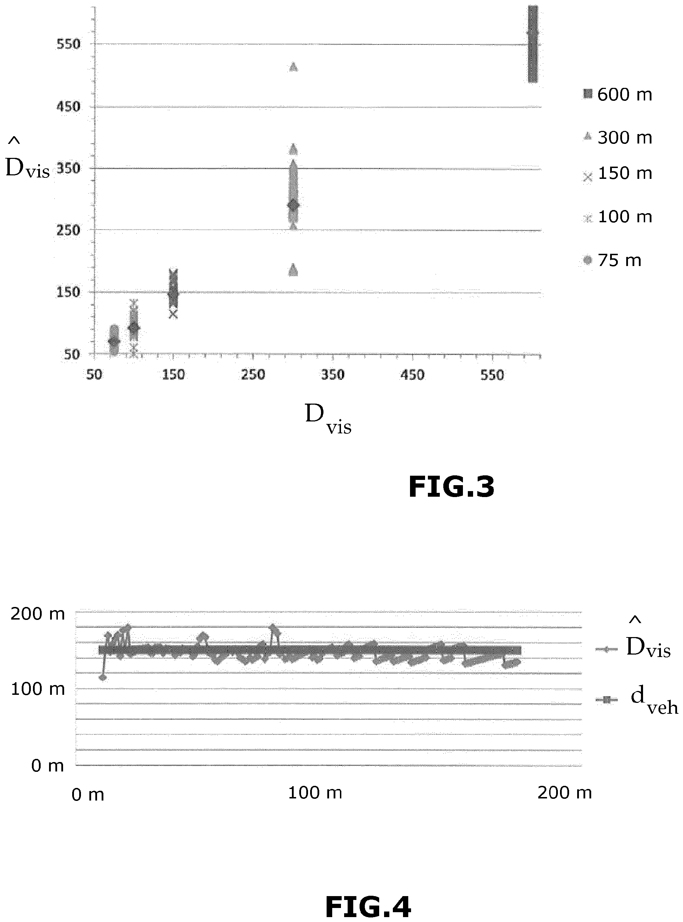

Les essais de la Demanderesse à différentes distances de visibilité connues liées à différentes conditions de brouillard (typiquement 600 m, 300 m, 150 m, 100 m et 75 m) ont permis de valider les distances estimées avec le système selon l'invention (voir en particulier la figure 3 qui montre que les distances estimées $\hat{D}_{vis}$ en ordonnées correspondent à chaque fois aux distances réelles $D_{vis}$ en abscisses).

En outre, la figure 4, qui représente les variations de distance de visibilité estimée en fonction de la distance $d_{veh}$ correspondant à la distance du véhicule détecté servant de mire pour extraire les contrastes, montre que l'estimation faite selon l'invention est relativement indépendante de la distance à laquelle le véhicule détecté se trouve.

Dans la description qui précède, on a supposé que la caméra 2 était complètement indépendante du système de détection d'obstacle. En variante, une même caméra 2 multifonctions peut être utilisée pour d'une part, capter les images à partir desquelles les contrastes seront extraits, et d'autre part, détecter et tracer l'obstacle.

En outre, d'autres modes de réalisation sont envisageables, sans départir du cadre de l'invention, dans lesquels on utilise, au lieu d'un système de détection d'obstacles, tout système embarqué apte à localiser un objet et à fournir une estimation de la distance séparant le véhicule automobile de l'objet localisé.

Ainsi, on peut envisager d'utiliser un système de navigation embarqué sur le véhicule. En effet, un tel système de navigation est apte à déterminer la présence d'infrastructures fixes telles qu'un bâtiment, un panneau de signalisation, un feu de croisement, un passage à niveau..et à fournir une estimation de la distance séparant ces infrastructures fixes du véhicule. On peut alors vérifier si les infrastructures ainsi localisées sont également présentes sur les images captées par la caméra 2, et déduire la distance de visibilité en utilisant une infrastructure ainsi localisée comme zone d'intérêt, selon le principe exposé ci-avant.

Une autre possibilité pour estimer la distance de visibilité consiste à utiliser, en plus de la caméra 2, une caméra arrière embarquée sur le véhicule, généralement utilisée pour les manoeuvres à basse vitesse. Dans ce cas, un décompte temporel est lancé depuis l'apparition d'un objet de type infrastructure fixe sur les images captées par la caméra 2 jusqu'à son apparition sur les images captées par la caméra arrière. Une estimation de la distance séparant le véhicule d'un objet détecté peut ainsi être faite à partir de la distance parcourue par le véhicule fournie par un odomètre.

Dans tous les cas, en basant la mesure sur un objet localisé tel qu'une voiture ou une infrastructure fixe, on gagne en précision et en fiabilité du fait même de la taille de l'objet qui reste plus important qu'un marquage de route.

## Revendications

1. Procédé d'estimation de la distance de visibilité météorologique ($D_{vis}$) à partir d'un traitement d'images de paysages captées successivement par une caméra (2) embarquée sur un véhicule automobile (1), ledit traitement d'images comprenant une étape ($S_{40}$) d'extraction de contrastes ($C_i$) d'un objet localisé par un système (3) embarqué sur ledit véhicule automobile (1) et apte à fournir une estimation de la distance séparant le véhicule automobile (1) de l'objet localisé dans au moins une zone d'intérêt des images ($Im_i$) et une étape ($S_{50}$) de mise en relation desdits contrastes ($C_i$) extraits et desdites distances (di) ledit traitement comporte en outre une étape ($S_{60}$) de calcul d'un coefficient d'extinction atmosphérique k à partir d'un premier contraste ($C_i$) de l'objet localisé à une première distance ($d_i$) dudit véhicule automobile (1) estimée par le système (3), ledit premier contraste étant extrait d'une première image captée par ladite caméra (2) à un premier instant ($t_i$), et d'un deuxième contraste ($C_{i+1}$) de l'objet localisé à une deuxième distance ($d_{i+1}$) dudit véhicule automobile (1) estimée par le système (3), ledit deuxième contraste ($C_{i+1}$) étant extrait d'une deuxième image captée par ladite caméra (2) à un deuxième instant ($t_{i+1}$) et une étape de déduction de ladite distance de visibilité météorologique ($D_{vis}$) en fonction du coefficient d'extinction atmosphérique k.

2. Procédé d'estimation selon la revendication 1, **caractérisé en ce que** ledit système (3) est un système de navigation et ledit objet localisé est une infrastructure fixe.

3. Procédé d'estimation selon la revendication 1, **caractérisé en ce que** ledit système (3) est un système de détection d'obstacles.

4. Procédé d'estimation selon la revendication 3, **caractérisé en ce que** ledit au moins un objet localisé est un autre véhicule à l'arrière duquel ledit véhicule automobile (1) se trouve.

5. Procédé d'estimation selon l'une quelconque des revendications précédentes, **caractérisé en ce que** ledit coefficient d'extinction atmosphérique k est calculé selon la relation

$$k = \frac{\ln(C_{i+1}/C_i)}{d_i - d_{i+1}}$$

dans laquelle C<sub>i</sub> est le premier contraste à la première distance d<sub>i</sub> et C<sub>i+1</sub> est le deuxième contraste de l'objet localisé à la deuxième distance d<sub>i+1</sub>.

6. Procédé d'estimation selon la revendication 5, **caractérisé en ce que** ladite distance de visibilité météorologique est estimée selon la relation

$$\hat{D}_{vis} = \frac{3}{k}$$

7. Système d'estimation de la distance de visibilité météorologique (D<sub>vis</sub>), embarqué sur un véhicule automobile (1) et comprenant une caméra (2) apte à capter des images successives de paysages et des moyens (4) de traitement desdites images aptes à extraire des contrastes (C<sub>i</sub>) d'un objet localisé par un système (3) embarqué sur ledit véhicule automobile (1) et apte à fournir une estimation de la distance séparant le véhicule automobile (1) de l'objet localisé dans au moins une zone d'intérêt des images (Im<sub>i</sub>) et à déterminer mettre en relation desdits contrastes (C<sub>i</sub>) extraits et desdites distances (d<sub>i</sub>),
lesdits moyens (4) de traitement sont en outre aptes à calculer un coefficient d'extinction atmosphérique k à partir d'un premier contraste (C<sub>i</sub>) de l'objet localisé à une première distance (d<sub>i</sub>) dudit véhicule automobile (1) estimée par le système (3), ledit premier contraste étant extrait d'une première image captée par ladite caméra (2) à un premier instant (t<sub>i</sub>), et d'un deuxième contraste (C<sub>i+1</sub>) de l'objet localisé à une deuxième distance (d<sub>i+1</sub>) dudit véhicule automobile (1) estimée par le système (3), ledit deuxième contraste (C<sub>i+1</sub>) étant extrait d'une deuxième image captée par ladite caméra (2) à un deuxième instant (t<sub>i+1</sub>) et lesdits moyens (4) sont aptes à déduire ladite distance de visibilité météorologique (D<sub>vis</sub>) en fonction du coefficient d'extinction atmosphérique k.

8. Système d'estimation selon la revendication 7, **caractérisé en ce que** le système (3) apte à localiser un objet est un système de navigation.

9. Système d'estimation selon la revendication 7, **caractérisé en ce que** le système (3) apte à localiser un objet est un système de détection d'obstacles.

10. Système d'estimation selon la revendication 9, **caractérisé en ce que** ladite caméra (2) est utilisée par le système de détection d'obstacles pour détecter l'objet.

11. Système d'estimation selon la revendication 9, **caractérisé en ce que** le système de détection d'obstacles comporte un radar ou un laser ou une autre caméra.

12. Un programme d'ordinateur, comprenant des moyens de code de programme pour mettre en oeuvre le procédé de l'une quelconque des revendications 1 à 6, lorsque ledit programme fonctionne sur un ordinateur.

13. Un produit de programme d'ordinateur, comprenant des moyens de code de programme, stocké sur un milieu lisible par un ordinateur, pour mettre en œuvre le procédé selon l'une quelconque des revendications 1 à 6, lorsque ledit programme fonctionne sur un ordinateur.

**Patentansprüche**

1. Verfahren zur Schätzung der meteorologischen Sichtweite (D<sub>vis</sub>) auf Grundlage einer Verarbeitung von Landschaftsbildern, die nacheinander von einer Kamera (2) an Bord eines Kraftfahrzeugs (1) aufgenommen werden, wobei die Bildverarbeitung einen Schritt (S<sub>40</sub>) des Extrahierens von Kontrasten (Ci) eines von einem System (3) an Bord des Kraftfahrzeugs (1) lokalisierten Objekts umfasst und dazu geeignet ist, eine Schätzung der Entfernung bereitzustellen, die das Kraftfahrzeug (1) von dem Objekt trennt, das in mindestens einem interessierenden Bereich der Bilder (Im<sub>i</sub>) lokalisiert wird, und einen Schritt (S<sub>50</sub>) des Verknüpfens der extrahierten Kontraste (C<sub>i</sub>) und der Entfernungen (d<sub>i</sub>), wobei die Verarbeitung außerdem einen Schritt (S<sub>60</sub>) des Berechnens eines atmosphärischen Extinktionskoeffizienten k auf Grundlage eines ersten Kontrasts (C<sub>i</sub>) des Objekts, das in einer vom System (3) geschätzten ersten Entfernung (di) vom Kraftfahrzeug (1) lokalisiert wird, wobei der erste Kontrast aus einem ersten Bild extrahiert wird, das von der Kamera (2) in einem ersten Moment (t<sub>i</sub>) erfasst wird, und eines zweiten Kontrasts (C<sub>i+1</sub>) des Objekts, das in einer vom System (3) geschätzten zweiten Entfernung (d<sub>i+1</sub>) vom Kraftfahrzeug (1) lokalisiert wird, wobei der

zweite Kontrast ($C_{i+1}$) aus einem zweiten Bild extrahiert wird, das von der Kamera (2) in einem zweiten Moment ($t_{i+i}$) erfasst wird, und einen Schritt des Ableitens der meteorologischen Sichtweite ($D_{vis}$) in Abhängigkeit vom atmosphärischen Extinktionskoeffizienten k umfasst.

2. Verfahren zur Schätzung nach Anspruch 1, **dadurch gekennzeichnet, dass** das System (3) ein Navigationssystem ist und das lokalisierte Objekt eine ortsfeste Infrastruktur ist.

3. Verfahren zur Schätzung nach Anspruch 1, **dadurch gekennzeichnet, dass** das System (3) ein Hinderniserkennungssystem ist.

4. Verfahren zur Schätzung nach Anspruch 3, **dadurch gekennzeichnet, dass** das mindestens eine lokalisierte Objekt ein anderes Fahrzeug ist, hinter dem sich das Kraftfahrzeug (1) befindet.

5. Verfahren zur Schätzung nach einem der vorhergehenden Ansprüche, **dadurch gekennzeichnet, dass** der atmosphärische Extinktionskoeffizient k entsprechend dem Verhältnis

$$k = \frac{\ln(C_{i+1}/C_i)}{d_i - d_{i+1}}$$

berechnet wird, wobei $C_i$ der erste Kontrast in der ersten Entfernung $d_i$ ist und $C_{i+1}$ der zweite Kontrast des Objekts ist, das in der zweiten Entfernung $d_{i+1}$ lokalisiert wird.

6. Verfahren zur Schätzung nach Anspruch 5, **dadurch gekennzeichnet, dass** die meteorologische Sichtweite entsprechend dem Verhältnis

$$\widehat{D}_{vis} = \frac{3}{k}$$

geschätzt wird.

7. System zur Schätzung der meteorologischen Sichtweite ($D_{vis}$) an Bord eines Kraftfahrzeugs (1), das eine Kamera (2), die dazu geeignet ist, aufeinanderfolgende Landschaftsbilder zu erfassen, und Bildverarbeitungsmittel (4) umfasst, die dazu geeignet sind, Kontraste ($C_i$) eines von einem System (3) an Bord des Kraftfahrzeugs (1) lokalisierten Objekts zu extrahieren, und dazu geeignet sind, eine Schätzung der Entfernung bereitzustellen, die das Kraftfahrzeug (1) vom Objekt trennt, das in mindestens einem interessierenden Bereich der Bilder ($Im_i$) lokalisiert wird, und die extrahierten Kontraste ($C_i$) und die Entfernungen ($d_i$) zu bestimmen zu korrelieren, wobei die Verarbeitungsmittel (4) außerdem dazu geeignet sind, einen atmosphärischen Extinktionskoeffizienten k auf Grundlage eines ersten Kontrasts ($C_i$) des Objekts, das in einer vom System (3) geschätzten ersten Entfernung ($d_i$) vom Kraftfahrzeug (1) lokalisiert wird, wobei der erste Kontrast aus einem ersten Bild extrahiert wird, das von der Kamera (2) in einem ersten Moment ($t_i$) erfasst wird, und eines zweiten Kontrasts ($C_{i+1}$) des Objekts, das in einer vom System (3) geschätzten zweiten Entfernung ($d_{i+1}$) vom Kraftfahrzeug (1) lokalisiert wird, zu berechnen, wobei der zweite Kontrast ($C_{i+1}$) aus einem zweiten Bild extrahiert wird, das von der Kamera (2) in einem zweiten Moment ($t_{i+1}$) erfasst wird, und die Mittel (4) dazu geeignet sind, die meteorologischen Sichtweite ($D_{vis}$) in Abhängigkeit vom atmosphärischen Extinktionskoeffizienten k abzuleiten.

8. System zur Schätzung nach Anspruch 7, **dadurch gekennzeichnet, dass** das zum Lokalisieren eines Objekts geeignete System (3) ein Navigationssystem ist.

9. System zur Schätzung nach Anspruch 7, **dadurch gekennzeichnet, dass** das zum Lokalisieren eines Objekts geeignete System (3) ein Hinderniserkennungssystem ist.

10. System zur Schätzung nach Anspruch 9, **dadurch gekennzeichnet, dass** die Kamera (2) vom Hinderniserkennungssystem verwendet wird, um das Objekt zu erkennen.

11. System zur Schätzung nach Anspruch 9, **dadurch gekennzeichnet, dass** das Hinderniserkennungssystem ein Radar oder einen Laser oder eine andere Kamera umfasst.

**12.** Computerprogramm, das Programmcodemittel umfasst, um das Verfahren nach einem der Ansprüche 1 bis 6 durchzuführen, wenn das Programm auf einem Computer läuft.

**13.** Computerprogrammprodukt, das Programmcodemittel umfasst, die auf einem computerlesbaren Medium gespeichert sind, um das Verfahren nach einem der Ansprüche 1 bis 6 durchzuführen, wenn das Programm auf einem Computer läuft.

**Claims**

**1.** Method for estimating meteorological visibility distance ($D_{vis}$) based on processing images of landscapes captured in succession by a camera (2) on board a motor vehicle (1), said image processing comprising a step ($S_{40}$) of extracting contrasts ($C_i$) of an object located by a system (3) on board said motor vehicle (1) and able to provide an estimate of the distance between the motor vehicle (1) and the located object in at least one region of interest of the images ($Im_i$, and a step ($S_{50}$) of correlating said extracted contrasts ($C_i$) and said distances ($d_i$), said processing furthermore comprising a step ($S_{60}$) of calculating an atmospheric extinction coefficient k based on a first contrast ($C_i$) of the located object at a first distance (di) from said motor vehicle (1) as estimated by the system (3), said first contrast being extracted from a first image captured by said camera (2) at a first time ($t_i$, and on a second contrast ($C_{i+1}$) of the located object at a second distance ($d_{i+1}$) from said motor vehicle (1) as estimated by the system (3), said second contrast ($C_{i+1}$) being extracted from a second image captured by said camera (2) at a second time ($t_{i+1}$), and a step of deducing said meteorological visibility distance ($D_{vis}$) on the basis of the atmospheric extinction coefficient k.

**2.** Estimation method according to Claim 1, **characterized in that** said system (3) is a navigation system and said located object is a fixed infrastructure.

**3.** Estimation method according to Claim 1, **characterized in that** said system (3) is an obstacle detection system.

**4.** Estimation method according to Claim 3, **characterized in that** said at least one located object is another vehicle behind which said motor vehicle (1) is situated.

**5.** Estimation method according to any one of the preceding claims, **characterized in that** said atmospheric extinction coefficient k is calculated using the relationship

$$k = \frac{\ln(C_{i+1}/C_i)}{d_i - d_{i+1}}$$

in which $C_i$ is the first contrast at the first distance $d_i$ and $C_{i+1}$ is the second contrast of the located object at the second distance $d_{i+1}$.

**6.** Estimation method according to Claim 5, **characterized in that** said meteorological visibility distance is estimated using the relationship

$$\hat{D}_{vis} = \frac{3}{k}$$

**7.** System for estimating meteorological visibility distance ($D_{vis}$), on board a motor vehicle (1) and comprising a camera (2) able to capture successive images of landscapes and means (4) for processing said images, able to extract contrasts ($C_i$) of an object located by a system (3) on board said motor vehicle (1) and able to provide an estimate of the distance between the motor vehicle (1) and the located object in at least one region of interest of the images ($Im_i$) and to determine correlate said extracted contrasts ($C_i$) and said distances ($d_i$), said processing means (4) furthermore being able to calculate an atmospheric extinction coefficient k based on a first contrast ($C_i$) of the located object at a first distance ($d_i$) from said motor vehicle (1) as estimated by the system (3), said first contrast being extracted from a first image captured by said camera (2) at a first time ($t_i$, and on a second contrast ($C_{i+1}$) of the

located object at a second distance (di+i) from said motor vehicle (1) as estimated by the system (3), said second contrast ($C_{i+1}$) being extracted from a second image captured by said camera (2) at a second time ($t_{i+1}$), and said means (4) being able to deduce said meteorological visibility distance ($D_{vis}$) on the basis of the atmospheric extinction coefficient k.

8. Estimation system according to Claim 7, **characterized in that** the system (3) able to locate an object is a navigation system.

9. Estimation system according to Claim 7, **characterized in that** the system (3) able to locate an object is an obstacle detection system.

10. Estimation system according to Claim 9, **characterized in that** said camera (2) is used by the obstacle detection system to detect the object.

11. Estimation system according to Claim 9, **characterized in that** the obstacle detection system comprises a radar or a laser or another camera.

12. Computer program, comprising program code means for implementing the method from any one of Claims 1 to 6 when said program runs on a computer.

13. Computer program product, comprising program code means, stored on a computer-readable medium, for implementing the method according to any one of Claims 1 to 6 when said program runs on a computer.

**FIG.1**

**FIG.2**

**FIG.3**

**FIG.4**

**EP 3 167 406 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7970178 A
- WO 2010099847 A